# EUROPEAN PATENT SPECIFICATION

(11) **EP 2 966 921 B1**
(45) Date of publication and mention of the grant of the patent: **26.12.2018**
(21) Application number: 14761216.2
(22) Date of filing: 04.03.2014
(51) Int. Cl.: H04W 72/04

(54) **RESOURCE ALLOCATION INFORMATION PROCESSING METHOD AND DEVICE**
INFORMATIONSVERARBEITUNGSVERFAHREN UND -VORRICHTUNG FÜR EINE RESSOURCENZUWEISUNG
PROCÉDÉ ET DISPOSITIF DE TRAITEMENT D'INFORMATIONS D'ATTRIBUTION DE RESSOURCES

(30) Priority: 06.03.2013 CN 201310072961
(43) Date of publication of application: 13.01.2016
(73) Proprietor: ZTE Corporation, Shenzhen, Guangdong 518057 (CN)
(72) Inventor: LV, Kaiying, Shenzhen Guangdong 518057 (CN); SUN, Bo, Shenzhen Guangdong 518057 (CN)
(74) Representative: Carangelo, Pierluigi
(86) International application number: PCT/CN2014/072856
(87) International publication number: WO 2014/135066

(56) References cited:
- WO-A1-2013/010430
- WO-A1-2013/078303
- CN-A- 102 196 574
- CN-A- 102 668 666
- CN-A- 102 726 110
- US-A1- 2007 086 417
- US-A1- 2011 110 339
- Minyoung Park: "Proposed Specification Framework for TGah Author(s): Name Affiliation Address Phone email", , 14 January 2013 (2013-01-14), XP055229045, Retrieved from the Internet: URL:https://mentor.ieee.org/802.11/dcn/11/ 11-11-1137-13-00ah-specification-framework -for-tgah.docx [retrieved on 2015-11-17]
- HIERTZ G R ET AL: "The evolution of wireless LANs and PANs - Analysis of IEEE 802.11 E for qos support in wireless lans", IEEE PERSONAL COMMUNICATIONS, IEEE COMMUNICATIONS SOCIETY, US, vol. 10, no. 6, 1 December 2003 (2003-12-01), pages 40-50, XP011107079, ISSN: 1070-9916, DOI: 10.1109/MWC.2003.1265851
- Ghosh Chittabrata: "Restricted access window signaling for uplink channel acces", , 1 July 2012 (2012-07-01), pages 1-13, XP055049761, Retrieved from the Internet: URL:https://mentor.ieee.org [retrieved on 2013-01-15]

## Description

### Technical Field

The present disclosure relates to the field of communication, and including a method and device for processing resource allocation information.

### Background

At present, application requirements on a Wireless Local Area Network (WLAN) in the field of wireless networks becomes more and more increased. The most common WLAN technologies adopting a series of standards 802.11a, 802.11b, 802.11g and the like are defined one after another in Institute of Electrical and Electronics Engineers 802.11 (IEEE802.11) groups, and then other task groups dedicated to developing standards involved in improvement of the existing 802.11 technologies appear one after another, for example, an 802.11ah task group mainly utilizes resources of an unlicensed frequency band of smaller than 1GHz, which is used for supporting new network applications such as a smart power grid, a sensor network and cellular network load sharing.

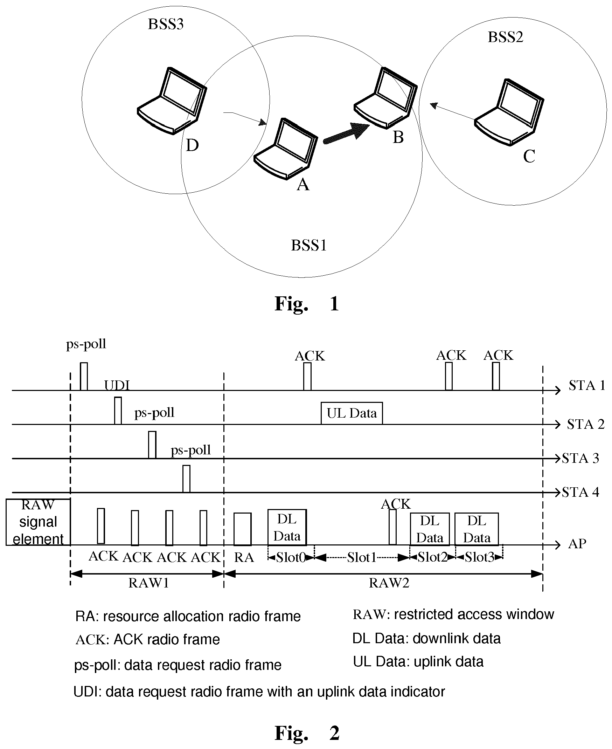

In 802.11, an Access Point (AP) and multiple Stations (STA) associated with the AP form a Basic Service Set (BSS). Two operating modes are defined in 802.11: a Distributed Coordination Function (DCF) and a Point Coordination Function (PCF), as well as improvements on the two operating modes: Enhanced Distributed Channel Access (EDCA) and Hybrid Coordination Function Controlled Channel Access (HCCA). Wherein, the DCF is the most basic operating mode, and enables the multiple STAs to share a wireless channel by virtue of Carrier Sense Multiple Access with Collision Avoidance (CSMA/CA). The EDCA is an enhanced operating mode, and enables multiple queues with different priorities to share the wireless channel and reserve a Transmission Opportunity (TXOP) by virtue of CSMA/CA. When multiple wireless STAs share a channel, it becomes very difficult for collision detection on a wireless environment, and one major problem is to hidden STA. Fig. 1 is a diagram of a hidden STA according to a related art. As shown in Fig. 1, STA A sends data to STA B, STA C sends data to STA B at the same time, and because STA C and STA A are located outside coverage of each other, a conflict may be caused when the STA A and the STA C send simultaneously. From the point of view of STA A, STA C is a hidden STA. In order to solve the problem of hidden STA, a virtual channel detection mechanism is proposed in 802.11, that is, time reservation information of channel is included in a header of a radio frame, other auditing STAs receiving the radio frame with the time reservation information sets a locally-stored Network Allocation Vector (NAV), and the value of the NAV is set to be a maximum value of the time reservation information, and within the time, the auditing STA may not send any data, so that a collision caused by the competition of the hidden STA for a channel is avoided.

Resources of an unlicensed frequency band of smaller than 1GHz may be utilized to provide coverage wider than that of a WLAN of a 2.4G or 5G frequency band, which also brings the problems of higher complexity and more hidden STAs. In order to solve the problems, a scheduling-based resource allocation manner is proposed in the related art, and each STA contends for a channel at a specified resource location in an EDCA manner. The STAs are discretely scheduled within a section of larger time window, so that the probability of simultaneously competing for the channel by the hidden STAs in the same BSS is greatly lowered, the problem of collisions among the hidden STAs is greatly solved, and the power is further saved for the STAs. For the technical solution, a method for further performing resource allocation indication for each STA in the scheduling-based resource allocation manner is provided in the related art. Fig. 2 is a diagram of scheduling-based resource allocation in the related art, and as shown in Fig. 2, an AP pre-allocates one or more Restricted Access Windows (RAW) to a group of STAs, and specifies one or more timeslots or time durations for every one or more STAs of the group of STAs, for requesting for data by the STAs, namely sending PS-POLL or trigger frames, or for sending and/or receiving data by the STAs.

In a universal scenario, data traffic of STAs in each group may be different, and in addition, multi-antenna mode transmission for multiple STAs provided by an AP is considered, so that lengths of timeslots or time durations allocated to each STA are required to be determined one by one according to a practical condition, which requires separate indication. In such a manner, enough flexibility is obviously ensured, but indication overhead is increased. Under a condition of that the number of the STAs is large, such overhead obviously reduces system efficiency. In a new WLAN application scenario defined by the 802.11ah task group, for example, typical examples of intelligent meter reading, a sensor network and the like, a service type of each STA is similar, that is, sizes of data groups in the same transmission direction may be considered to be approximately similar, but uplink services and downlink services are unbalanced.

In addition, in such an application scenario, it is relatively more difficult for application of a multi-antenna mode, so that a design may further be simplified to ensure optimization for a proprietary network and improve system efficiency. Moreover, on the basis of a scheduling mechanism in an existing art, an AP allocates a section of timeslot resource or time duration for one or more non-AP STAs to send uplink and downlink data. Then, how to coordinate data sending and reception between an access STA and a non-access STA becomes a trend.

Therefore, there exist the problems of high overhead, poor flexibility, low system efficiency and how to coordinate data sending and reception between the access STA and the non-access STA during resource allocation for STAs in the related art.

US 2011/0110339 A1, US 2007/0086417 A1, and the document IEEE 802.11-11/1137r13 "Proposed Specification Framework for TGah", author: Minyoung Park, provide related technical solutions; however, the above mentioned problem still remains unsolved.

### Summary

The present disclosure provides a method and device for processing resource allocation information, so as to solve the problems of high overhead, poor flexibility, low system efficiency and how to coordinate data sending and reception between an access STA and a non-access STA during resource allocation for STAs in the related art.

According to one aspect of the present disclosure, a method for processing resource allocation information is provided, comprising: allocating, by an Access Point, AP, resources for data transmission between the AP and one or more Stations, STA, in an STA group according to a resource granularity, wherein the resource granularity comprises a preset time length and/or a preset bandwidth; and sending, by the AP, resource allocation information for allocating the resources to the STA group.

In an example embodiment, allocating, by the AP, the resources for the data transmission between the AP and the one or more STAs in the STA group according to the resource granularity comprises: allocating, by the AP, downlink resources for the AP to transmit downlink data to the one or more STAs, wherein the downlink resources comprise: resources for the AP to send the downlink data to the one or more STAs and resources for the one or more STAs to send feedback information to the AP; and/or, allocating, by the AP, uplink resources for the one or more STAs to transmit uplink data to the AP, wherein the uplink resources comprise: resources for the one or more STAs to send the uplink data to the AP and resources for the AP to send feedback information to the one or more STAs.

In an example embodiment, allocating, by the AP, the resources for the data transmission between the AP and the one or more STAs in the STA group according to the resource granularity comprises: allocating, by the AP, according to an uplink resource granularity, uplink resources for the one or more STAs to transmit uplink data to the AP; and/or, allocating, by the AP, according to a downlink resource granularity, downlink resources for the AP to transmit downlink data to the one or more STAs.

In an example embodiment, allocating, by the AP, the resources for the data transmission between the AP and the one or more STAs in the STA group according to the resource granularity comprises: for one determined STA in the STA group, allocating, by the AP, continuous resources to the determined STA, wherein the continuous resources are used for the AP to send downlink data to the determined STA and for the determined STA to send uplink data to the AP.

In an example embodiment, after sending, by the AP, the resource allocation information for allocating the resources to the STA group, the method further comprises: detecting, by the AP, whether channels at beginnings of the resources, determined according to the resource allocation information, of the one or more STAs are idle or not; and when the channels are determined to be idle, triggering, by the AP, the data transmission between the AP and the one or more STAs.

In an example embodiment, before triggering, by the AP, the data transmission between the AP and the one or more STAs, the method further comprises: performing, by the AP, a channel contention.

In an example embodiment, the AP contends for the channels by using a highest priority in channel access priorities.

In an example embodiment, after triggering, by the AP, the data transmission between the AP and the one or more STAs, the method further comprises at least one of the following: when the AP triggers the data transmission between the AP and the one or more STAs in a manner of sending downlink data, receiving, by the AP, Acknowledgement, ACK, information and/or uplink data from the one or more STAs; when the AP triggers the data transmission between the AP and the one or more STAs in a manner of sending triggering information, receiving, by the AP, uplink data from the one or more STAs; when the AP triggers the data transmission between the AP and the one or more STAs in a manner of sending triggering information and Network Allocation Vectors, NAV, locally stored by the one or more STAs are not zero, receiving, by the AP, ACK information from the one or more STAs; and when the AP triggers the data transmission between the AP and the one or more STAs in a manner of sending triggering information and NAVs locally stored by the one or more STAs are zero, receiving, by the AP, uplink data from the one or more STAs.

In an example embodiment, after sending, by the AP, the resource allocation information for allocating the resources to the STA group, the method further comprises: receiving, by the AP, uplink data from one or more STAs with uplink data to be sent, wherein the one or more STAs with the uplink data to be sent contend to access channels after the channels at beginnings of the resources, determined according to the resource allocation information, of the one or more STAs are detected to be idle.

In an example embodiment, the one or more STAs with the uplink data to be sent contend for the channel by using a highest priority in the channel access priorities.

In an example embodiment, the resource allocation information comprises at least one of: information for indicating a manner of allocating resources, an uplink resource granularity, a downlink resource granularity, an uplink service indication bitmap, a downlink service indication bitmap and an uplink and downlink service indication bitmap.

In an example embodiment, the uplink service indication bitmap, the downlink service indication bitmap and the uplink and downlink service indication bitmap are configured to indicate the numbers of resources allocated to the STA group by the AP respectively.

In an example embodiment, after receiving the resource allocation information, the STA group obtains resource allocation location information of the STA group according to corresponding locations and service resource allocation indication information of the STA group in the service indication bitmap and service resource allocation indication information of other STAs in a group at corresponding locations in the service indication bitmap by utilizing uplink resource allocation granularity information and downlink resource allocation granularity information.

According to another aspect of the embodiment, a device for processing resource allocation information is provided, wherein the device is located at an Access Point, AP, and comprises: an allocating component, configured to allocate resources for data transmission between the AP and one or more Stations, STA, in an STA group according to a resource granularity, wherein the resource granularity comprises a preset time length and/or a preset bandwidth; and a sending component, configured to send resource allocation information for allocating the resources to the STA group.

In an example embodiment, the allocating component comprises: a first allocating element, configured to allocate downlink resources for the AP to transmit downlink data to the one or more STAs, wherein the downlink resources comprise: resources for the AP to send the downlink data to the one or more STAs and resources for the one or more STAs to send feedback information to the AP; and/or, a second allocating element, configured to allocate uplink resources for the one or more STAs to transmit uplink data to the AP, wherein the uplink resources comprise: resources for the one or more STAs to send the uplink data to the AP and resources for the AP to send feedback information to the one or more STAs.

In an example embodiment, the allocating component comprises: a third allocating element, configured to allocate, according to an uplink resource granularity, uplink resources for the one or more STAs to transmit uplink data to the AP; and/or, a fourth allocating element, configured to allocate, according to a downlink resource granularity, downlink resources for the AP to transmit downlink data to the one or more STAs.

In an example embodiment, the allocating component comprises: a fifth allocating element, configured to, for one determined STA in the STA group, allocate continuous resources to the determined STA, wherein the continuous resources are used for the AP to send downlink data to the determined STA and for the determined STA to send uplink data to the AP.

In an example embodiment, the device further comprises: a detecting component, configured to detect whether channels at beginnings of the resources, determined according to the resource allocation information, of the one or more STAs are idle or not; and a triggering component, configured to, when the channels are determined to be idle, trigger the data transmission between the AP and the one or more STAs.

In an example embodiment, the device further comprises: a contending component, configured to, before the AP triggers the data transmission between the AP and the one or more STAs, perform a channel contention.

In an example embodiment, the contending component is further configured to contend for the channels by using a highest priority in channel access priorities.

In an example embodiment, the device further comprises at least one of: a first receiving component, configured to, when the AP triggers the data transmission between the AP and the one or more STAs in a manner of sending downlink data, receive Acknowledgement, ACK, information and/or uplink data from the one or more STAs; a second receiving component, configured to, when the AP triggers the data transmission between the AP and the one or more STAs in a manner of sending triggering information, receive uplink data from the one or more STAs; a third receiving component, configured to, when the AP triggers the data transmission between the AP and the one or more STAs in a manner of sending triggering information and Network Allocation Vectors, NAV, locally stored by the one or more STAs are not zero, receive ACK information from the one or more STAs; and a fourth receiving component, configured to, when the AP triggers the data transmission between the AP and the one or more STAs in a manner of sending triggering information and NAVs locally stored by the one or more STAs are zero, receive uplink data from the one or more STAs.

In an example embodiment, the device further comprises: a fifth receiving component, configured to receive uplink data from one or more STAs with uplink data to be sent, wherein the one or more STAs with the uplink data to be sent contend to access channels after the channels at beginnings of the resources, determined according to the resource allocation information, of the one or more STAs are detected to be idle.

By the present disclosure, the AP is adopted to allocate the resources for data transmission between the AP and the one or more STAs in the STA group according to the resource granularity, wherein the resource granularity comprises the preset time length/and or the preset bandwidth; and the AP sends the resource allocation information for allocating the resources to the STA group, so that the problems of high overhead, poor flexibility, low system efficiency and how to coordinate data sending and reception between the access STA and the non-access STA during resource allocation for STAs in the related art are solved, and the effects of reducing signalling resource overhead, ensuring high flexibility, effectively improving system efficiency, better coordinating data sending and reception between the access STA and the non-access STA and effectively avoiding a collision are further achieved.

### Brief Description of the Drawings

The drawings described here are adopted to provide further understanding of the present disclosure, and form a part of the present disclosure. Schematic embodiments of the present disclosure and description thereof are adopted to explain the present disclosure and not intended to form improper limits to the present disclosure. In the drawings:
Fig. 1 is a diagram of a hidden STA in the related art;
Fig. 2 is a diagram of scheduling-based resource allocation in the related art;
Fig. 3 is a flowchart of a method for processing resource allocation information according to an embodiment of the present disclosure;
Fig. 4 is a structure diagram of a device for processing resource allocation information according to an embodiment of the present disclosure;
Fig. 5 is an first example structure diagram of the allocating component 42 in the device for processing resource allocation information according to an embodiment of the present disclosure;
Fig. 6 is a second example structure diagram of the allocating component 42 in the device for processing resource allocation information according to an embodiment of the present disclosure;
Fig. 7 is a third example structure diagram of the allocating component 42 in the device for processing resource allocation information processing device according to an embodiment of the present disclosure;
Fig. 8 is an example structure diagram of the device for processing resource allocation information according to an embodiment of the present disclosure;
Fig. 9 is a second example structure diagram of the device for processing resource allocation information according to an embodiment of the present disclosure;
Fig. 10 is a third example structure diagram of the device for processing resource allocation information according to an embodiment of the present disclosure;
Fig. 11 is a fourth example structure diagram of the device for processing resource allocation information according to an embodiment of the present disclosure;
Fig. 12 is a diagram of resource allocation information according to example embodiment 1 of the present disclosure;
Fig. 13 is a diagram of relative locations of resources allocated to each STA in a transmission resource area of a group according to example embodiment 1 of the present disclosure;
Fig. 14 is a diagram of resource allocation information carried in uplink and downlink service indication bitmaps according to example embodiment 2 of the present disclosure;
Fig. 15 is a first resource allocation diagram of allocating resources to a STA group by an AP according to an example embodiment of the present disclosure;
Fig. 16 is a second resource allocation diagram of allocating resources to a STA group by an AP according to an example embodiment of the present disclosure; and
Fig. 17 is a third resource allocation diagram of allocating resources to a STA group by an AP according to an example embodiment of the present disclosure.

### Detailed Description of the Embodiments

The present disclosure is described below with reference to the drawings and embodiments in detail. It is important to note that the embodiments in the present disclosure and characteristics in the embodiments can be combined under the condition of no conflicts.

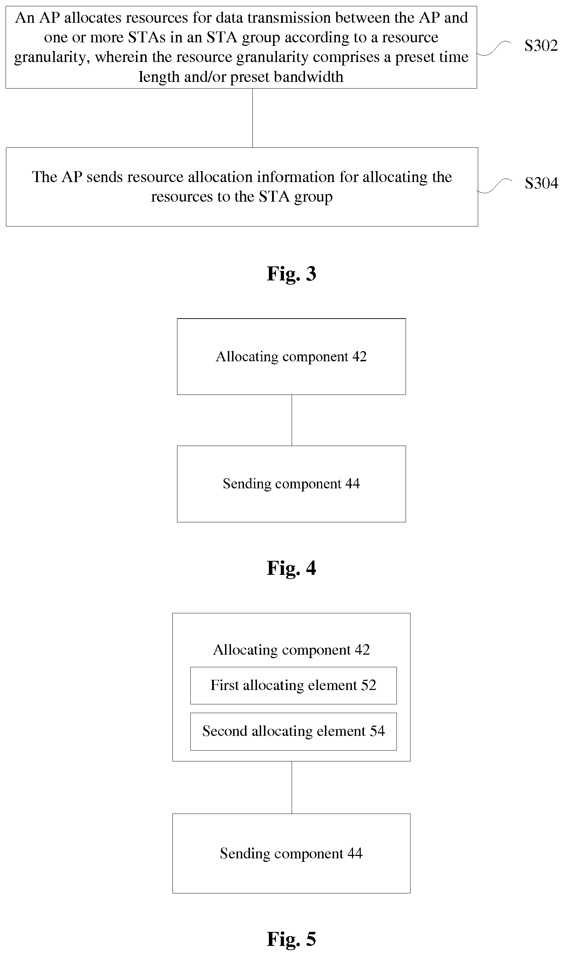

A method for processing resource allocation information is provided in the embodiment, Fig. 3 is a flowchart of a method for processing resource allocation information according to an embodiment of the present disclosure, and as shown in Fig. 3, the flow includes the following steps:
Step 302: An AP allocates resources for data transmission between the AP and one or more STAs in an STA group according to a resource granularity, wherein the resource granularity comprises a preset time length and/or a preset bandwidth; and
Step 304: the AP sends resource allocation information for allocating the resources to the STA group, wherein the resource allocation information may preferably include at least one of: information for indicating a manner of allocating resources, an uplink resource granularity, a downlink resource granularity, an uplink service indication bitmap, a downlink service indication bitmap and an uplink and downlink service indication bitmap.

By the steps, the AP allocates the resources to the one or more STAs in the same STA group (a combination of STAs with similar service types), and for the related art where there is no STA group and different resources are allocated to different STAs, the resource allocated to each STA in the STA group are relatively fixed, so that it is unnecessary to indicate the allocation of different STAs respectively, and the signalling for indicating resource allocation information is effectively reduced; and in addition, the resource granularity may be flexibly set, so that higher flexibility is achieved, the problems of high overhead and poor flexibility of resource allocation for the STAs in the related art are solved, and moreover, system efficiency is effectively improved.

When the AP allocates the resources for the data transmission between the AP and the one or more STAs in the STA group, different manners of resource allocation may be adopted when different aspects are considered during allocation: for example, the allocated resources include resources for transmitting data as well as resources for transmitting corresponding feedback information. For example, the AP allocates downlink resources for the AP to transmit downlink data to the one or more STAs, wherein the downlink resources include: resources for the AP to send the downlink data to the one or more STAs and resources for the one or more STAs to send feedback information to the AP when it is indicated that a feedback for the downlink data is required; or, the AP allocates uplink resources for the one or more STAs to transmit uplink data to the AP, wherein the uplink resources include: resources for the one or more STAs to send the uplink data to the AP and resources for the AP to send feedback information to the one or more STAs when it is indicated that a feedback for the uplink data is required. Of course, when the resources are allocated, there is further a condition that it is indicated that the feedbacks for the uplink data transmission and the downlink data transmission are required at the same time.

For another example, the AP allocates the resources for the data transmission between the AP and the one or more STAs in the STA group according to the resource granularity includes that: the AP allocates, according to an uplink resource granularity, uplink resources for the one or more STAs to transmit uplink data to the AP; and/or, the AP allocates, according to a downlink resource granularity, downlink resources for the AP to transmit downlink data to the one or more STAs. The AP allocates the uplink resources according to the uplink resource granularity and allocates the downlink resources according to the downlink resource granularity. It is important to note that the uplink resource granularity and the downlink resource granularity may be the same or different, and when the uplink resource granularity and the downlink resource granularity are the same, the resources allocated to each STA in the STA group by the AP are the same, or are an integral multiple of the RE (resource granularity); and when the uplink resource granularity is different from the downlink resource granularity, the resources allocated to each STA in the STA group by the AP are different. It is important to note that the above differences are not only comprises differences between the STAs only allocated with the uplink resources and the STAs only allocated with the downlink resources, but also include differences between the STAs allocated with both uplink resources and downlink resources and the STAs only allocated with the uplink resources or the STAs only allocated with the downlink resources.

In addition, when the AP allocates the resources for the data transmission between the AP and the one or more STAs in the STA group according to the resource granularity, for one determined STA in the STA group, the AP allocates continuous resources to the determined STA, wherein the continuous resources are used for the AP to send downlink data to the determined STA and for the determined STA to send uplink data to the AP, that is, the AP not only allocates uplink resources to the determined STA, and also allocates downlink resources to the determined STA.

In an example embodiment, after the AP sends the resource allocation information for allocating the resources to the STA group, the method further includes that: the AP detects whether channels at beginnings of the resources determined according to the resource allocation information is idle or not; and under the condition that the channels are determined to be idle, the AP triggers the data transmission between the AP and the one or more STAs. For example, under the condition that the channel is determined to be idle, when the AP needs to send downlink data to a certain STA in the STA group, the AP directly triggers the data transmission to send the downlink data to the certain STA; and under the condition that the channel is determined to be idle, when a certain STA in the STA group needs to send uplink data, the AP sends data request information (of course, it may be other information such as synchronization information) to the STA to trigger the data transmission, and the STA sends the uplink data to the AP after receiving the data request information.

After the channel is determined to be idle, except the condition that the AP may directly trigger the data transmission between the AP and the one or more STAs, there may exist another condition, that is, when the AP determines that the channel is idle by itself, the AP needs to perform channel contention (for example, contends for a channel according to an EDCA channel contention mechanism) to avoid a collision more accurately, and triggers the data transmission between the AP and the one or more STAs. Preferably, the AP contends for the channel by using a highest priority in channel access priorities.

After the AP triggers the data transmission between the AP and the one or more STAs, different manners for feeding back response messages to the AP by the one or more STAs may be adopted due to the adoption of different triggering manners. For example, under the condition that the AP triggers the data transmission between the AP and the one or more STAs in a manner of sending downlink data, the AP receives ACK information and/or uplink data from the one or more STAs (that is, the one or more STAs feeds back the ACK information to the AP as the response messages); for another example, under the condition that the AP triggers the data transmission between the AP and the one or more STAs in a manner of sending triggering information, such a condition is further divided into a condition without considering NAVs and a condition considering the NAVs, and when the NAVs are not considered, "uplink data frames are sent" regardless of values of the NAVs; when the NAVs are considered, there are also two conditions: under the condition that the AP triggers the data transmission between the AP and the one or more STAs in the manner of sending triggering information and the NAVs locally stored by the one or more STAs are not zero, the AP receives the ACK information from the one or more STAs (at this time, the STAs also feed back the ACK information to the AP); and under the condition that the AP triggers the data transmission between the AP and the one or more STAs in the manner of sending triggering information and the NAVs locally stored by the one or more STAs are zero, the AP receives the uplink data from the one or more STAs (at this time, the one or more STAs feed back the uplink data to the AP as the response messages).

After the AP sends the resource allocation information for allocating the resources to the STA group, the one or more STAs may actively trigger the data transmission, and then the AP receives the uplink data from one or more STAs with uplink data to be sent, wherein the one or more STAs with the uplink data to be sent contend to access channels after the channels at the beginnings of the resources, determined according to the resource allocation information, of the one or more STAs are detected to be idle, and may contend for the channel in an EDCA manner, for example, the one or more STAs contend for the channel to send the data by using a highest priority in the channel access priorities. It is important to note that there may be multiple conditions for the one or more STAs with the uplink data to be sent, for example, a condition that the one or more STAs do not have downlink data but the uplink data to be transmitted; and of course, there may be another condition, that is, the one or more STAs have both uplink data and downlink data, but the data transmission is triggered by the one or more STAs at first.

A device for processing resource allocation information is further provided in the embodiment, and the device is configured to implement the abovementioned embodiment and example implementation modes, and that what has been described will not be repeated. For example, a term "component", used below, is a combination of software and/or hardware for realizing preset functions. The device described in the following embodiment is preferably implemented by software, but the implementation of the device with hardware or the combination of software and hardware is also possible and conceived.

Fig. 4 is a structure diagram of a device for processing resource allocation information according to an embodiment of the present disclosure, and as shown in Fig. 4, the device is located at an AP and includes an allocating component 42 and a sending component 44. The device is described below.

The allocating component 42 is configured to allocate resources for data transmission between the AP and one or more STAs in an STA group according to a resource granularity, wherein the resource granularity comprises a preset time length and/or a preset bandwidth; and the sending component 44 is connected to the allocating component 42, and is configured to send resource allocation information for allocating the resources to the STA group.

Fig. 5 is an first example structure diagram of the allocating component 42 in the device for processing resource allocation information according to an embodiment of the present disclosure, and as shown in Fig. 5, the allocating component 42 includes a first allocating element 52 and/or a second allocating element 54. The allocating component 42 is described below.

The first allocating element 52 is configured to allocate downlink resources for the AP to transmit downlink data to the one or more STAs, wherein the downlink resources include: resources for the AP to send the downlink data to the one or more STAs and resources for the one or more STAs to send feedback information to the AP; and the second allocating element 54 is configured to allocate uplink resources for the one or more STAs to transmit uplink data to the AP, wherein the uplink resources include: resources for the one or more STAs to send the uplink data to the AP and resources for the AP to send feedback information to the one or more STAs.

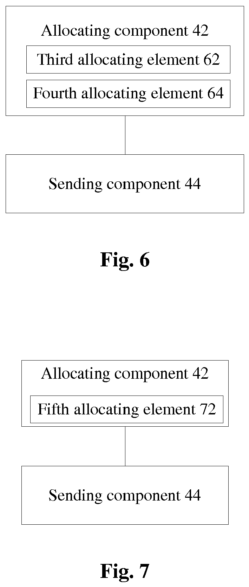

Fig. 6 is a second example structure diagram of the allocating component 42 in the device for processing resource allocation information according to an embodiment of the present disclosure, and as shown in Fig. 6, the allocating component 42 includes a third allocating element 62 and/or a fourth allocating element 64. The allocating component 42 is described below.

The third allocating element 62 is configured to allocate, according to an uplink resource granularity, uplink resources for the one or more STAs to transmit uplink data to the AP; and the fourth allocating element 64 is configured to allocate, according to a downlink resource granularity, downlink resources for the AP to transmit downlink data to the one or more STAs.

Fig. 7 is a third example structure diagram of the allocating component 42 in the device for processing resource allocation information according to an embodiment of the present disclosure, and as shown in Fig. 7, the allocating component 42 includes a fifth allocating element 72. The allocating component 42 is described below.

The fifth allocating element 72 is configured to, for one determined STA in the STA group, allocate continuous resources to the determined STA, wherein the continuous resources are used for the AP to send downlink data to the determined STA and for the determined STA to send uplink data to the AP.

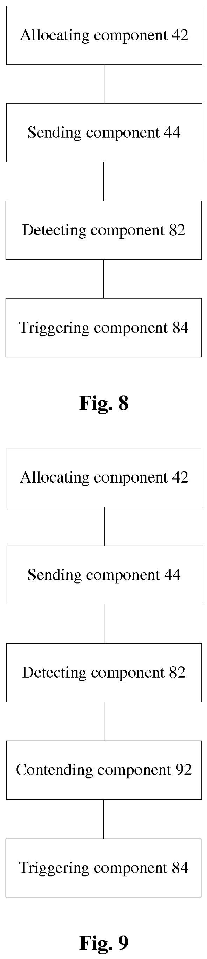

Fig. 8 is an example structure diagram of the device for processing resource allocation information according to an embodiment of the present disclosure, and as shown in Fig. 8, the device, except all the components shown in Fig. 4, further includes a detecting component 82 and a triggering component 84. The example structure is described below.

The detecting component 82 is connected to the sending component 44, and is configured to detect whether channels at the beginnings of the resources, determined according to the resource allocation information, of the one or more STAs are idle or not; and the triggering component 84 is connected to the detecting component 82, and is configured to, under the condition that the detecting component 82 determines that the channels are idle, trigger the data transmission between the AP and the one or more STAs.

Fig. 9 is a second example structure diagram of the device for processing resource allocation information according to an embodiment of the present disclosure, and as shown in Fig. 9, the device, except all the components shown in Fig. 8, further includes a contending component 92. The contending component 92 is described below.

The contending component 92 is connected to the detecting component 82 and the triggering component 84, and is configured to, before the AP triggers the data transmission between the AP and the one or more STAs, perform a channel contention.

In an example embodiment, the contending component 92 is further configured to complete for the channels by using a highest priority in channel access priorities.

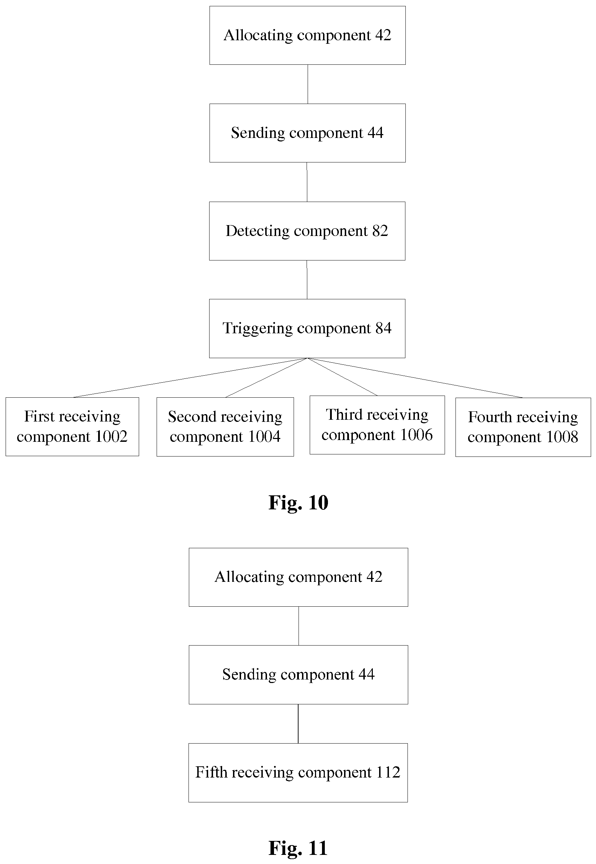

Fig. 10 is a third example structure diagram of the device for processing resource allocation information according to an embodiment of the present disclosure, and as shown in Fig. 10, the device, except all the components shown in Fig. 8, further includes at least one of: a first receiving component 1002, a second receiving component 1004, a third receiving component 1006 and a fourth receiving component 1008. The example structure is described below.

The first receiving component 1002 is connected to the triggering component 84, and is configured to, under the condition that the AP triggers the data transmission between the AP and the one or more STAs in a manner of sending downlink data, receive ACK information and/or uplink data from the one or more STAs; the second receiving component 1004 is configured to, under the condition that the AP triggers the data transmission between the AP and the one or more STAs in a manner of sending triggering information, receive the uplink data from the one or more STAs; the third receiving component 1006 is connected to the triggering component 84, and is configured to, under the condition that the AP triggers the data transmission between the AP and the one or more STAs in a manner of sending triggering information and NAVs locally stored by the one or more STAs are not zero, receive ACK information from the one or more STAs; and the fourth receiving component 1008 is configured to, under the condition that the AP triggers the data transmission between the AP and the one or more STAs in a manner of sending triggering information and NAVs locally stored by the one or more STAs are zero, receive uplink data from the one or more STAs.

Fig. 11 is a fourth example structure diagram of the device for processing resource allocation information according to an embodiment of the present disclosure, and as shown in Fig. 11, the device, except all the components shown in Fig. 4, further includes a fifth receiving component 112. The fifth receiving component 112 is connected to the sending component 44, and is configured to receive uplink data from the one or more STAs with uplink data to be sent, wherein the one or more STAs with the uplink data to be sent contend to access channels after the channels at the beginnings of the resources, determined according to the resource allocation information, of the one or more STAs are detected to be idle.

For the problem of how to reduce signalling indication overhead and coordinate data sending and reception between the access STA and the non-access STA on the basis of group scheduling on the one or more STAs with similar services in a wireless network in the related art, a scheduling-based solution for transmitting data in the wireless network is provided in the embodiment, and a flexible and simple resource granularity configuration manner is adopted for configuring the uplink and downlink transmission resources and coordinating data sending and reception between the access STA and the non-access STAs, so that the problem of high overhead caused by resource allocation indication for each STA when there are a large number of STAs with similar service types in the related art is solved, resource allocation indication is optimized, system efficiency is improved, and in addition, data sending and reception between the access STA and the non-access STAs is coordinated to avoid the collision.

A scheduling-based method for transmitting data provided in the embodiment includes that: an AP sends a radio frame to a group of STAs, allocates time/bandwidth resources in a specified time zone for one or more STAs in the group of STAs to transmit data by virtue of an uplink resource allocation granularity (i.e. the uplink resource granularity) contained in the radio frame, and/or allocates time/bandwidth resources in the specified time zone for the one or more STAs in the group of STAs to transmit data by virtue of a downlink resource allocation granularity (i.e. the downlink resource granularity) contained in the radio frame. The AP and/or the STA group send radio frames on the corresponding allocated resources and perform exchange of one or more frames (for the condition that not only the resources for transmitting data are allocated, but also the resources for correspondingly transmitting the feedback information are allocated).

In an example embodiment, the AP allocates the time/bandwidth resources in the specified time zone for the one or more STAs in the group of STAs to send uplink data by virtue of the same uplink resource granularity, wherein the one or more STAs in the group of STAs are the STAs with uplink data to be sent.

In an optional embodiment, the AP allocates the time/bandwidth resources in the specified time zone for the one or more STAs in the group of STAs to send downlink data by virtue of the same downlink resource granularity, wherein the one or more STAs in the group of STAs are the STAs with downlink data to be sent.

The AP may allocate a section of continuous timeslot resources for a certain STA to send uplink data and/or to receive downlink data; and the section of continuous timeslot resources may consist of time lengths represented by one or more downlink resource granularities and/or uplink resource granularities, wherein a basic time unit of a system or a time unit predefined by the system, or a time unit indicated in the radio frame ,may be taken as the granularity of the resource granularity.

It is important to note that the downlink resource granularity and the uplink resource granularity may be the same or different. The radio frame sent by the AP includes at least one of: information for indicating a manner of allocating resources, the uplink resource granularity, the downlink resource granularity, an uplink service indication bitmap and a downlink service indication bitmap, wherein the information for indicating a manner of allocating resources is configured to indicate whether an manner for allocating the resources is an uplink and downlink resource granularity-based allocation manner, that is, whether the uplink resources of each STA are allocated according to the uplink resource granularity and the downlink resources of each STA are allocated according to the downlink resource granularity or not.

The uplink service indication bitmap and the downlink service bitmap may be one service indication bitmap, wherein a plurality of continuous bits in the service indication bitmaps is used for indicating whether there is an uplink and/or downlink service(s) on the STA, and indicating the number(s) of the corresponding allocated uplink resources and/or downlink resources.

The group of STAs decode a domain carrying information for indicating the manner of allocating resources after receiving the radio frame, and obtains corresponding timeslot resource allocation information according to the uplink and/or downlink resource granularity/granularities and uplink and/or downlink service indication bitmap information when it is determined that the uplink and downlink resource granularity-based allocation manner is adopted.

At a starting moment of a section of continuous timeslot resources allocated to a certain STA, when it is determined that a channel is idle, the AP sends a radio frame to the corresponding STA or sends the radio frame to the corresponding STA after competing for the channel; and the radio frame may be a data radio frame, a data request radio frame, a synchronization frame and the like. The AP contends for the channel by using a highest priority when contending for the channel to send the radio frame to the corresponding STA.

In an example embodiment, the STA performs exchange transmission of one or more frames with the AP after receiving and successfully decoding the radio frame sent by the AP within the allocated section of continuous timeslot resources, wherein the exchange transmission of the one or more frames includes uplink frame exchange transmission and/or downlink frame exchange transmission.

In an example embodiment, when the STA has uplink data to be sent and receives and successfully decodes the radio frame sent by the AP within the allocated timeslot resources, an ACK frame is taken as a response frame; and specially, if a locally stored NAV is zero, a data frame may also be taken as the response frame.

By the embodiment and example implementation modes, the characteristic of asymmetry of uplink and downlink services is utilized. For example, in a sensor network and a smart power grid network, a sending STA allocates timeslot resources for uplink transmission and downlink transmission by flexibly using different resource granularities respectively, so that signalling overhead is reduced, and utilization efficiency of radio resources is increased. In addition, the sending STA initiates the frame transmission, so that the problem of collision of a hidden STA is favourably reduced.

On the basis of the scheduling-based method for transmitting data in the wireless network, example embodiments are described below with reference to an AP and a group of STAs in a STA group.

A sending STA (i.e. the AP) sends a radio frame for indicating radio resource allocation to the group of STAs. Information for indicating the manner of allocating resources is carried in the radio frame. When the Information for indicating the manner of allocating resources indicates that an uplink and downlink resource granularity-based allocation manner is adopt, the uplink resource allocation granularity information and the downlink resource allocation granularity information for indicating time/bandwidth resources for the uplink data transmission and the downlink data transmission respectively are further carried in the radio frame.

The uplink time/bandwidth resources and downlink data transmission time/bandwidth resources of each STA are allocated according to the uplink resource granularity and the downlink resource granularity respectively; for each STA with only an uplink service, the allocated uplink data transmission time/bandwidth resources are the same; for each STA with only a downlink service, the allocated downlink data transmission time/bandwidth resources are the same; and for each STA with both uplink services and downlink services, the allocated uplink and downlink data transmission time/bandwidth resources are the same.

An uplink service indication bitmap information and/or downlink service indication bitmap information may be further carried in the radio frame. Each bit or every N bits in service indication bitmaps indicate whether an STA has uplink and/or downlink data or not, and indicate the number of the corresponding allocated uplink and/or downlink resources.

One or more STAs in the group STAs obtain own resource allocation location information in a specified time zone according to own corresponding locations and service (resource allocation) indication information in the service indication bitmaps and service (resource allocation) indication information of other STAs at corresponding locations in the service indication bitmaps by utilizing uplink and downlink resource allocation granularity information.

In an optional manner, the method may further include the following processing:
the AP allocates a section of continuous timeslot resources in the specified time zone to a certain STA to transmit uplink and/downlink data; the AP judges a state of a channel at a starting location of the section of continuous timeslot resources, and sends a radio frame to the STA when the channel is idle; and if the AP caches the downlink data of the STA, the sending STA sends a data radio frame to the STA, otherwise the AP sends a data request radio frame or a synchronization radio frame to the STA.

The STA waits to receive the radio frame at the starting location of the allocated section of continuous timeslot resources. When successfully receiving and decoding the radio frame sent by the AP, the STA performs exchange transmission of one or more frames with the AP.

The STA may perform exchange of one or more frames with the AP regardless of the local NAV of the STA. The STA may also perform exchange of one or more frames with the AP according to its local NAV. If the NVA is zero, the STA may send an uplink data frame during performing frame exchange with the AP. Otherwise, the STA only responds with an ACK frame during performing frame exchange with the AP, and may send the uplink data frame until its NAV is zero.

The embodiment and example implementation modes of the present disclosure are described below with reference to the drawings.

### Example embodiment 1

After network access and network authentication, a user STA is associated with an AP to negotiate a sleep mode. When the user STA works in the sleep mode, the user STA periodically wakes up to monitor one or more beacons sent by the AP. The user STA obtains RAW information of a group to which the user STA belongs itself, and obtains downlink service caching indication information of the user STA according to a downlink Traffic Indication Message (TIM) corresponding to the group. If there is a downlink service indicator for the user STA, the user STA sends a data request radio frame PS-POLL in a corresponding RAW, and the data request radio frame may further contain uplink service indication information; and when there is no the downlink service indicator for the user STA, but there is an uplink service to be sent, the user STA may also send a radio frame in the corresponding RAW to notify the AP that there is uplink data to be sent on the STA.

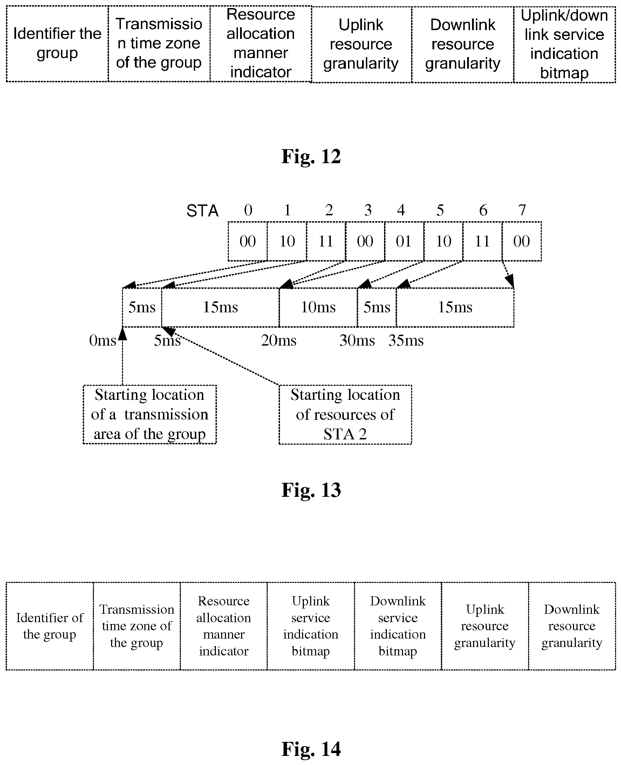

The AP sends a radio frame for indicating the resource allocation after receiving the data request radio frame and uplink service indication information from the user STA in the group. Fig. 12 is a diagram of resource allocation information according to example embodiment 1 of the present disclosure, and as shown in Fig. 12, the resource allocation information includes: identification information of the group, transmission time zone information of the group, information for indicating a manner of allocating resources, uplink resource granularity information, downlink resource granularity information and uplink and downlink service indication bitmap information contained in the radio frame carrying resource allocation indication. Wherein, the transmission time zone information of the group refers to a section of time zone allocated to the group by the AP. The information for indicating the manner of allocating resources indicates whether a resource allocation manner is a fixed allocation manner based on uplink resource granularity and downlink resource granularity or not. The uplink resource granularity information refers to the information of the uplink transmission resource allocated to STAs with uplink data to be set in the group; and uplink transmission resources obtained by each STA are the same. The downlink resource granularity information refers to the information of the downlink transmission resource allocated to STAs with downlink data to be received in the group; the downlink transmission resources obtained by each STA are the same. The uplink resource granularity and the downlink resource granularity may be different, and may also be the same. The uplink service indication bitmap and downlink service indication bitmap may be one bitmap, wherein every one or more bits is used for indicating uplink and downlink services of an STA. For example, one bit is adopted to indicate an uplink service of an STA, for example, 0 represents that there is an uplink service, 1 represents that there is no uplink service, and the bitmap is an uplink service indication bitmap; for another example, one bit is adopted to indicate a downlink service of an STA, and similarly, 0 represents that there is no downlink service, 1 represents that there is a downlink service, and the bitmap is a downlink service indication bitmap; and for a third example, two bits may also be adopted to indicate uplink and downlink services of an STA, and in the embodiment, two bits are adopted to represent the service indication information of a certain STA, for example, value "00" represents that there is no uplink and downlink services, "01" represents that there is the uplink service, "10" represents that there is the downlink service, "11" represents that there are both the uplink service and downlink service, and the bitmap is an uplink and downlink service indication bitmap.

The user STA obtains its own service indication information after receiving the radio frame carrying the resource allocation indication, obtains service indication information of other STAs and relative locations of the user STA and the other STAs at the same time, and then obtain its relative location in a group transmission resource area according to the uplink and downlink resource granularity information. For example, the resource allocation indication carried in the radio frame indicates that the uplink resource granularity is 10ms, the downlink resource granularity is 5ms and the service indication bitmap is "00 10 11 00 01 10 11 00". Every two bits in the bitmap correspond to the service indication information of STAs 0-7. Wherein, there is no service on STA 0, and there is no transmission resources to allocate to the STA 0; there is a downlink service on STA 1, and a resource of 5ms is allocated to the STA 1; and there are uplink and downlink services on STA 2, and a resource of 5ms plus 10 ms, i.e. a continuous resource of 15ms, are allocated to the STA 3. The STAs in the group obtain the resource allocation information of each STA and the transmission resource area information of the group, and then may further learn about relative locations of the STAs in the transmission resource area of the group. Fig. 13 is a diagram of relative locations of resources allocated to each STA in a transmission resource area of a group according to example embodiment 1 of the present disclosure, and as shown in Fig. 13, a resource location of STA 3 includes the sixth to twentieth ms from the beginning of the transmission resource area of the group.

### Example embodiment 2

Similar to the example embodiment 1, the difference is that the AP contains the uplink and downlink service indication bitmaps in the radio frame carrying resource allocation indication respectively. Fig. 14 is a diagram of resource allocation information carried in uplink and downlink service indication bitmaps according to example embodiment 2 of the present disclosure, and as shown in Fig. 14, the uplink service indication bitmap only includes uplink service indicators of the STAs in the group. The AP generates the uplink service indication bitmap for the STAs in the group according to the uplink service indication information contained in the data request radio frames sent by the STAs in the group. The downlink service indication bitmap only includes downlink service indicators of the STAs in the group. The AP generates the downlink service indication bitmap for the STAs in the group according to the data request radio frames sent by the STAs in the group.

When the STAs in the group only have downlink data to be sent, the AP only allocates the downlink data transmission resources. The radio frame carrying resource allocation indication does not contain the uplink service indication bitmap and the uplink resource granularity information.

When the STAs in the group only have uplink data to be sent, the AP only allocates the uplink data transmission resources. The radio frame carrying resource allocation indication does not contain the downlink service indication bitmap and the downlink resource granularity information.

The other is the same as that of example embodiment 1.

### Example embodiment 3

Similar to the example embodiment 1 or 2, the difference is that the AP contains the uplink and/or downlink service indication bitmap(s) in the radio frame carrying resource allocation indication. Multiple bits in the uplink and/or downlink service indication bitmap(s) correspond to an STA. In the embodiment, every four continuous bits indicate the resource allocation of an STA, wherein two bits indicate uplink resource allocation, and the other two bits indicate downlink resource allocation. For example, "00" represents no resource allocation, "01" represents allocation of a resource of a basic resource granularity, "10" represents allocation of a resource of two basic resource granularities, "11" represents allocation of a resource of four basic resource granularities, and so on.

The other is same as that of example embodiment 1 or 2.

### Example embodiment 4

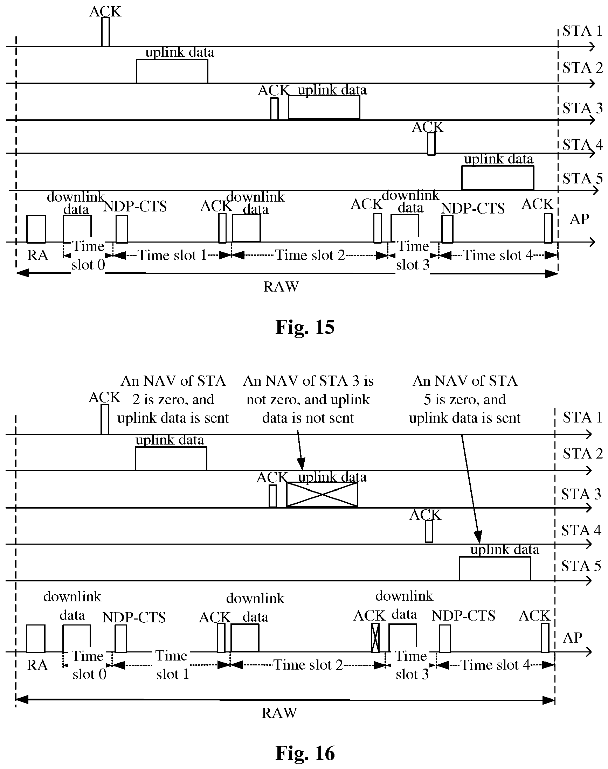

Similar to the example embodiment 1 or 2, Fig. 15 is a first resource allocation diagram of allocating resources to a STA group by an AP according to an example embodiment of the present disclosure, and as shown in Fig. 15, the AP allocates a transmission resource area to the STAs in the group, and allocates a section of continuous timeslot resources for an STA with (an) uplink and/or downlink service(s) to transmit uplink and/or downlink data. The AP performs Carrier Sense (CS), including physical channel detection and virtual channel detection, to judge whether a channel at the beginning of the continuous timeslot resources allocated to the STA is idle or not. If the channel is idle, the AP performs EDCA competition by using a highest priority to access a channel, and sends a radio frame to the STA; and if there is downlink data to be sent of the STA on the AP, the sent radio frame is a data radio frame, otherwise the sent radio frame is a null data frame or a Media Access Control (MAC) layer load-free physical frame. After receiving the radio frame, the receiving STA directly sends a response radio frame after waiting for a Short Inter-Frame Space (SIFS) regardless of a value of a locally stored NAV. If the received radio frame is a data radio frame, the sent response radio frame is an ACK radio frame or an uplink data radio frame or the ACK radio frame and the uplink data frame. If the received radio frame is a null data radio frame or a MAC layer load-free physical frame (NDP-CTS), the sent response radio frame is an uplink data radio frame.

### Example embodiment 5

Similar to the example embodiment 3, Fig. 16 is a second resource allocation diagram of allocating resources to a STA group by an AP according to an example embodiment of the present disclosure, and as shown in Fig. 16, the receiving STA views the value of the locally stored NAV after receiving the radio frame. If the received radio frame is a data radio frame and the receiving STA does not have any uplink data to be sent, the receiving STA directly sends an ACK radio frame after waiting for an SIFS regardless of the value of the NAV. If the received radio frame is a data radio frame and the receiving STA has uplink data to be sent, the receiving STA directly sends the ACK radio frame and/or an uplink data frame after waiting for the SIFS if the NAV is zero, and directly sends the ACK radio frame after the SIFS if the NAV is not zero.

If the received radio frame is a null data radio frame or a MAC layer load-free physical frame (NDP-CTS), the receiving STA directly sends the uplink data frame after waiting for the SIFS if the NAV is zero, and directly sends the ACK radio frame after waiting for the SIFS or does not respond to the AP if the NAV is not zero.

### Example embodiment 6

Similar to the example embodiment 1 or 2, the AP allocates a transmission resource area to the STAs in the group, and allocates respectively a section of continuous timeslot resources for an STA with (an) uplink and/downlink service(s) in the group to transmit uplink and/or downlink data. The AP performs CS to judge whether a channel at the beginning of the continuous timeslot resources allocated to the STA is idle or not. If the channel is idle, the AP accesses the channel, and sends a radio frame to the STA; and if the AP has the downlink data to be sent of the STA, the sent radio frame is a data radio frame, otherwise the sent radio frame may be a null data frame or a MAC layer load-free physical frame. After receiving the radio frame, the receiving STA directly sends a response radio frame after waiting for an SIFS regardless of a value of a locally stored NAV. If the received radio frame is a data radio frame, the sent response radio frame is an ACK radio frame or an uplink data radio frame or the ACK radio frame and the uplink data frame. If the received radio frame is a null data radio frame or a MAC layer load-free physical frame (NDP-CTS), the sent response radio frame is an uplink data radio frame.

### Example embodiment 7

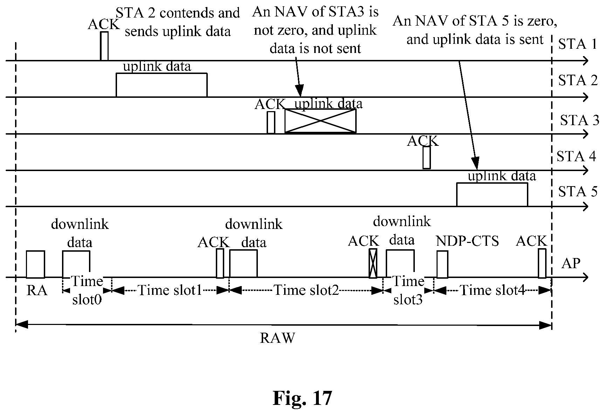

Similar to the example embodiment 1 or 2, the AP allocates a transmission resource area to the STAs in the group, and allocates a section of continuous timeslot resources for an STA with (an) uplink and/or downlink service(s) in the group to transmit uplink and/or downlink data. Fig. 17 is a third resource allocation diagram of allocating resources to a STA group by an AP according to an example embodiment of the present disclosure, and as shown in Fig. 17, STA2 only has uplink data to be sent, CS is performed on a channel at the beginning of the continuous timeslot resources allocated to the STA 2, and if the channel is determined to be idle, EDCA contention is performed by using a highest priority to access the channel, and a radio frame is sent to the AP.

By the embodiments and example implementation modes, the AP may allocate the continuous resources for the STAs to transmit uplink and downlink data. Moreover, the AP may further allocate required uplink resources to all the STAs in the group at first and then allocate required downlink resources. That is, the uplink data transmission resources and the downlink data transmission resources belongs two independent time zones for downlink data transmission and uplink data transmission between the STAs and the AP respectively.

Obviously, those skilled in the art should know that each component or step of the present disclosure may be implemented by a universal computing device, and the components or steps can be concentrated on a single computing device or distributed on a network formed by a plurality of computing devices, and may optionally be implemented by programmable codes executable for the computing devices, so that the components or steps may be stored in a storage device for execution with the computing devices, or the shown or described steps may be executed in a sequence different from the sequence here under a certain condition, or the components or steps may form each integrated circuit component, or multiple components or steps therein may form a single integrated circuit component for implementation. As a consequence, the present disclosure is not limited to any specific hardware and software combination.

The above is only the example embodiment of the present disclosure and not intended to limit the present disclosure, and for those skilled in the art, the present disclosure may have various modifications and variations.

### Industrial Practicability

From the above, the method and device for processing the resource allocation information provided by the embodiment of the present disclosure have beneficial effects as follows: the problems of high overhead, poor flexibility, low system efficiency and how to coordinate data sending and reception between an access STA and a non-access STA during resource allocation for STAs in the related art are solved, and the effects of reducing signalling resource overhead, ensuring high flexibility, effectively improving system efficiency, better coordinating data sending and reception between the access STA and the non-access STA and effectively avoiding a collision are further achieved.

## Claims

1. A method for processing resource allocation information, the method comprising:
allocating, by an Access Point, AP, resources for data transmission between the AP and one or more Stations, STA, in an STA group according to a resource granularity, wherein the resource granularity comprises a preset time length and/or a preset bandwidth (S302); and
sending, by the AP, resource allocation information for allocating the resources to the STA group(S304); **characterized in that**, after sending, by the AP, the resource allocation information for allocating the resources to the STA group, the method further comprises: detecting, by the AP, whether channels at beginnings of the resources, determined according to the resource allocation information, of the one or more STAs are idle or not; and when the channels are determined to be idle, triggering, by the AP, the data transmission between the AP and the one or more STAs;
wherein before triggering, by the AP, the data transmission between the AP and the one or more STAs, the method comprises: performing, by the AP, a channel contention;
wherein after triggering, by the AP, the data transmission between the AP and the one or more STAs, the method comprises at least one of the following: when the AP triggers the data transmission between the AP and the one or more STAs in a manner of sending triggering information, receiving, by the AP, uplink data from the one or more STAs; when the AP triggers the data transmission between the AP and the one or more STAs in a manner of sending triggering information and NAVs locally stored by the one or more STAs are zero, receiving, by the AP, uplink data from the one or more STAs.

2. The method according to claim 1, further **characterized in that** allocating, by the AP, the resources for the data transmission between the AP and the one or more STAs in the STA group according to the resource granularity comprises:
allocating, by the AP, downlink resources for the AP to transmit downlink data to the one or more STAs, wherein the downlink resources comprise: resources for the AP to send the downlink data to the one or more STAs and resources for the one or more STAs to send feedback information to the AP, and/or, allocating, by the AP, uplink resources for the one or more STAs to transmit uplink data to the AP, wherein the uplink resources comprise: resources for the one or more STAs to send the uplink data to the AP and resources for the AP to send feedback information to the one or more STAs, or,
allocating, by the AP, according to an uplink resource granularity, uplink resources for the one or more STAs to transmit uplink data to the AP; and/or, allocating, by the AP, according to a downlink resource granularity, downlink resources for the AP to transmit downlink data to the one or more STAs; or,
for one determined STA in the STA group, allocating, by the AP, continuous resources to the determined STA, wherein the continuous resources are used for the AP to send downlink data to the determined STA and for the determined STA to send uplink data to the AP.

3. The method according to claim 1, further **characterized in that** the AP contends for the channels by using a highest priority in channel access priorities.

4. The method according to claim 1, further **characterized in that** after triggering, by the AP, the data transmission between the AP and the one or more STAs, the method further comprises at least one of the following:
when the AP triggers the data transmission between the AP and the one or more STAs in a manner of sending downlink data, receiving, by the AP, Acknowledgement, ACK, information and/or uplink data from the one or more STAs; when the AP triggers the data transmission between the AP and the one or more STAs in a manner of sending triggering information and Network Allocation Vectors, NAV, locally stored by the one or more STAs are not zero, receiving, by the AP, ACK information from the one or more STAs..

5. The method according to claim 1, further **characterized in that** after sending, by the AP, the resource allocation information for allocating the resources to the STA group, the method further comprises:
receiving, by the AP, uplink data from one or more STAs with uplink data to be sent, wherein the one or more STAs with the uplink data to be sent contend to access channels after the channels at beginnings of the resources, determined according to the resource allocation information, of the one or more STAs are detected to be idle.

6. The method according to any one of claims 1 to 5, further **characterized in that** the resource allocation information comprises at least one of:
information for indicating a manner of allocating resources, an uplink resource granularity, a downlink resource granularity, an uplink service indication bitmap, a downlink service indication bitmap and an uplink and downlink service indication bitmap; wherein,
the uplink service indication bitmap, the downlink service indication bitmap and the uplink and downlink service indication bitmap are configured to indicate the numbers of resources allocated to the STA group by the AP respectively; or,
after receiving the resource allocation information, the STA group obtains resource allocation location information of the STA group according to corresponding locations and service resource allocation indication information of the STA group in the service indication bitmap and service resource allocation indication information of other STAs in a group at corresponding locations in the service indication bitmap by utilizing uplink resource allocation granularity information and downlink resource allocation granularity information.

7. A device for processing resource allocation information, wherein the device is located at an Access Point, AP, and comprises:
an allocating component (42), configured to allocate resources for data transmission between the AP and one or more Stations, STA, in an STA group according to a resource granularity, wherein the resource granularity comprises a preset time length and/or a preset bandwidth,
a sending component (44), configured to send resource allocation information for allocating the resources to the STA group: the device being **characterized by** further comprising:
a detecting component (82), configured to detect whether channels at beginnings of the resources, determined according to the resource allocation information, of the one or more STAs are idle or not;
a triggering component (84), configured to, when the channels are determined to be idle, trigger the data transmission between the AP and the one or more STAs;
a contending component (92), configured to, before the AP triggers the data transmission between the AP and the one or more STAs, perform a channel contention;
wherein the device further comprises at least one of following: a second receiving component (1004), configured to, when the AP triggers the data transmission between the AP and the one or more STAs in a manner of sending triggering information, receive uplink data from the one or more STAs, a fourth receiving component (1008), configured to, when the AP triggers the data transmission between the AP and the one or more STAs in a manner of sending triggering information and NAVs locally stored by the one or more STAs are zero, receive uplink data from the one or more STAs.

8. The device according to claim 7, further **characterized in that** the allocating component comprises:
a first allocating element (52), configured to allocate downlink resources for the AP to transmit downlink data to the one or more STAs, wherein the downlink resources comprise: resources for the AP to send the downlink data to the one or more STAs and resources for the one or more STAs to send feedback information to the AP; and/or a second allocating element (54), configured to allocate uplink resources for the one or more STAs to transmit uplink data to the AP, wherein the uplink resources comprise: resources for the one or more STAs to send the uplink data to the AP and resources for the AP to send feedback information to the one or more STAs; or
a third allocating element (62), configured to allocate, according to an uplink resource granularity, uplink resources for the one or more STAs to transmit uplink data to the AP; and/or, a fourth allocating element (64), configured to allocate, according to a downlink resource granularity, downlink resources for the AP to transmit downlink data to the one or more STAs; or,
a fifth allocating element (72), configured to, for one determined STA in the STA group, allocate continuous resources to the determined STA, wherein the continuous resources are used for the AP to send downlink data to the determined STA and for the determined STA to send uplink data to the AP.

9. The device according to claim 7, Ffurther **characterized in that** the device further comprises:
a contending component (92), configured to, before the AP triggers the data transmission between the AP and the one or more STAs, perform a channel contention.

10. The device according to claim 7, wherein the contending component is further configured to contend for the channels by using a highest priority in channel access priorities.

11. The device according to claim 7, further **characterized in that** the device further comprises at least one of following:
a first receiving component (1002), configured to, when the AP triggers the data transmission between the AP and the one or more STAs in a manner of sending downlink data, receive Acknowledgement, ACK, information and/or uplink data from the one or more STAs, ,
a third receiving component (1006), configured to, when the AP triggers the data transmission between the AP and the one or more STAs in a manner of sending triggering information and Network Allocation Vectors, NAV, locally stored by the one or more STAs are not zero, receive ACK information from the one or more STAs.

12. The device according to claim 7, further **characterized in that** the device further comprises:
a fifth receiving component (112), configured to receive uplink data from one or more STAs with uplink data to be sent, wherein the one or more STAs with the uplink data to be sent contend to access channels after the channels at beginnings of the resources, determined according to the resource allocation information, of the one or more STAs are detected to be idle.

## Patentansprüche

1. Verfahren zum Verarbeiten von Ressourcenzuordnungsinformationen, wobei das Verfahren Folgendes umfasst:
durch einen Zugangspunkt (Access Point, AP), Zuordnen von Ressourcen für die Datenübertragung zwischen dem AP und einer oder mehreren Stationen (STA) in einer STA-Gruppe gemäß einer Ressourcengranularität, wobei die Ressourcengranularität eine voreingestellte Zeitdauer und/oder eine voreingestellte Bandbreite (S302) umfasst; und
durch den AP, Senden von Ressourcenzuordnungsinformationen zum Zuordnen der Ressourcen an die STA-Gruppe (S304); **dadurch gekennzeichnet, dass** nach dem Senden der Ressourcenzuordnungsinformation zum Zuordnen der Ressourcen an die STA-Gruppe durch den AP das Verfahren ferner Folgendes umfasst: durch den AP, Erkennen, ob sich Kanäle am Anfang der Ressourcen, die gemäß den Ressourcenzuordnungsinformationen ermittelt wurden, der einen oder mehreren STAs im Leerlauf befinden; und wenn festgestellt wird, dass sich die Kanäle nicht im Leerlauf befinden, durch den AP, Auslösen der Datenübertragung zwischen dem AP und der einen oder den mehreren STAs;
wobei vor dem Auslösen der Datenübertragung zwischen dem AP und der einen oder den mehreren STAs durch den AP das Verfahren Folgendes umfasst: durch den AP, Herbeiführen eines Kanalkonflikts;
wobei nach dem Auslösen der Datenübertragung zwischen dem AP und der einen oder den mehreren STAs durch das AP das Verfahren mindestens eines des Folgenden umfasst: wenn der AP die Datenübertragung zwischen dem AP und der einen oder den mehreren STAs auf eine Weise des Sendens von Auslöseinformationen auslöst, Empfangen von Uplink-Daten von der einen oder mehreren STAs durch den AP; wenn der AP die Datenübertragung zwischen dem AP und der einen oder den mehreren STAs auf eine Weise des Sendens von Auslöseinformationen auslöst und durch die eine oder die mehreren STAs gespeicherte Netzzuordnungsvektoren (Network Allocation Vectors, NAVs) null sind, Empfangen von Uplink-Daten von der einen oder den mehreren STAs durch den AP.

2. Verfahren nach Anspruch 1, ferner **dadurch gekennzeichnet, dass** das Zuordnen der Ressourcen für die Datenübertragung zwischen dem AP und dem einen oder den mehreren STAs in der STA-Gruppe durch den AP gemäß der Ressourcengranularität Folgendes umfasst:
Zuordnen von Downlink-Ressourcen für den AP durch den AP zum Übertragen von Downlink-Daten an die eine oder mehrere STAs, wobei die Downlink-Ressourcen Folgendes umfassen: Ressourcen für den AP zum Senden der Downlink-Daten an die eine oder mehreren STAs und Ressourcen für die eine oder die mehreren STAs zum Senden von Rückmeldeinformationen an den AP und/oder Zuordnen von Uplink-Ressourcen für die eine oder die mehreren STAs zum Übertragen von Uplink-Daten an den AP durch den AP, wobei die Uplink-Ressourcen Folgendes umfassen: Ressourcen für die eine oder mehreren STAs zum Senden der Uplink-Daten an den AP und Ressourcen für den AP zum Senden von Rückmeldeinformationen an die eine oder mehreren STAs, oder
durch den AP, Zuordnen von Uplink-Ressourcen für die eine oder mehrere STAs gemäß einer Uplink-Ressourcengranularität, um Uplink-Daten an den AP zu übertragen; und/oder durch den AP, Zuordnen von Downlink-Ressourcen für den AP gemäß einer Downlink-Ressourcengranularität, um Downlink-Daten an die eine oder mehreren STAs zu übertragen; oder
für eine bestimmte STA in der STA-Gruppe, durch den AP, Zuordnen kontinuierlicher Ressourcen zu der bestimmten STA, wobei die kontinuierlichen Ressourcen für den AP verwendet werden, um Downlink-Daten an die bestimmte STA zu senden, und für die bestimmte STA, um Uplink-Daten an den AP zu senden.

3. Verfahren nach Anspruch 1, ferner **dadurch gekennzeichnet, dass** der AP um die Kanäle konkurriert, indem er bei Kanalzugriffsprioritäten eine höchste Priorität verwendet.

4. Verfahren nach Anspruch 1, ferner **dadurch gekennzeichnet, dass** das Verfahren nach dem Auslösen der Datenübertragung zwischen dem AP und der einen oder den mehreren STAs durch den AP ferner mindestens eines aus Folgendem umfasst:
durch den AP, Empfangen von Quittierungsinformationen (ACK-Informationen) (ACK = Acknowledgement) und/oder Uplink-Verbindungsdaten von der einen oder den mehreren STAs, wenn der AP die Datenübertragung zwischen dem AP und der einen oder den mehreren STAs in einer Weise des Sendens von Downlink-Daten auslöst; durch den AP, Empfangen von ACK-Informationen von der einen oder den mehreren STAs, wenn der AP die Datenübertragung zwischen dem AP und der einen oder den mehreren STAs in einer Weise des Sendens von Auslöseinformationen auslöst und durch die eine oder die mehreren STAs lokal gespeicherte Netzwerkzuordnungsvektoren (NAV) nicht null sind.

5. Verfahren nach Anspruch 1, ferner **dadurch gekennzeichnet, dass** das Verfahren ferner Folgendes umfasst, nachdem durch den AP die Ressourcenordnungsinformationen zum Zuordnen der Ressourcen an die STA-Gruppe gesendet wurden:
durch den AP, Empfangen von Uplink-Daten von einer oder mehreren STAs mit zu sendenden Uplink-Daten, wobei die eine oder mehreren STAs mit den zu sendenden Uplink-Daten darum konkurrieren, auf Kanäle nach den Kanälen an den Anfängen der Ressourcen der einen oder mehrerer STAs zuzugreifen, die gemäß den Ressourcenzuordnungsinformationen als im Leerlauf befindlich erkannt wurden.

6. Verfahren nach einem der Ansprüche 1 bis 5, ferner **dadurch gekennzeichnet, dass** die Ressourcenzuordnungsinformationen mindestens eines umfassen aus:
Informationen zum Anzeigen einer Art des Zuordnens von Ressourcen, einer Uplink-Verbindungsressourcengranularität, einer Downlink-Verbindungsressourcengranularität, einer Uplink-Dienstanzeigebitmap, einer Downlink-Dienstzeigebitmap und einer Uplink- und Downlink-Dienstanzeigebitmap; wobei
Die Uplink-Dienstanzeigebitmap, die Downlink-Dienstanzeigebitmap und die Uplink- und Downlink-Dienstanzeigebitmap konfiguriert sind, um die Anzahlen von Ressourcen anzugeben, die der STA-Gruppe durch den AP jeweils zugeordnet wurden; oder
die STA-Gruppe nach dem Empfangen der Ressourcenzuordnungsinformationen Ressourcenzuordnungs-Standortinformationen der STA-Gruppe gemäß entsprechenden Standorten und Dienstressourcen-Zuordnungsanzeigeinformationen der STA-Gruppe in der Dienstanzeigebitmap und Dienstressourcen-Zuordnungsanzeigeinformationen anderer STA in einer Gruppe an entsprechenden Stellen in der Dienstanzeigebitmap erhält, indem Uplink-Ressourcenzuordnungsgranularitätsinformationen und Downlink-Ressourcenzuordnungsgranularitätsinformationen genutzt werden.

7. Vorrichtung zum Verarbeiten von Ressourcenzuordnungsinformationen, wobei sich die Vorrichtung an einem Zugangspunkt (AP) befindet und Folgendes umfasst:
eine Zuordnungskomponente (42), die konfiguriert ist, um Ressourcen zur Datenübertragung zwischen dem AP und einer oder mehreren Stationen (STA) in einer STA-Gruppe gemäß einer Ressourcengranularität zuzuordnen, wobei die Ressourcengranularität eine voreingestellte Zeitdauer und/oder eine voreingestellte Bandbreite umfasst,
eine Sendekomponente (44), die konfiguriert ist, um Ressourcenzuordnungsinformationen zum Zuordnen der Ressourcen an die STA-Gruppe zu senden, wobei die Vorrichtung **dadurch gekennzeichnet ist, dass** sie ferner Folgendes umfasst:
eine Erfassungskomponente (82), die konfiguriert ist, um zu erkennen, ob sich Kanäle am Anfang der Ressourcen der einen oder mehreren STAs im Leerlauf befinden, die gemäß den Ressourcenzuordnungsinformationen ermittelt wurden,
eine Auslösekomponente (84), die konfiguriert ist, um die Datenübertragung zwischen dem AP und der einen oder den mehreren STAs auszulösen, wenn festgestellt wird, dass sich die Kanäle im Leerlauf befinden;
eine Konkurrenzkomponente (92), die konfiguriert ist, um einen Kanalkonflikt herbeizuführen, bevor der AP die Datenübertragung zwischen dem AP und der einen oder den mehreren STAs auslöst;
wobei die Vorrichtung ferner mindestens eines aus Folgendem umfasst: eine zweite Empfangskomponente (1004), die konfiguriert ist, um Uplink-Daten von der einen oder den mehreren STAs zu empfangen, wenn der AP die Datenübertragung zwischen dem AP und der einen oder den mehreren STAs auf eine Weise des Sendens von Auslöseinformationen auslöst, eine vierte Empfangskomponente (1008), die konfiguriert ist, um Uplink-Daten von der einen oder den mehreren STAs zu empfangen, wenn der AP die Datenübertragung zwischen dem AP und der einen oder den mehreren STAs in einer Weise des Sendens von Auslösungsinformationen auslöst und durch die eine oder mehrere STAs lokal gespeicherte NAVs null sind.

8. Vorrichtung nach Anspruch 7, ferner **dadurch gekennzeichnet, dass** die Zuordnungskomponente Folgendes umfasst:
ein erstes Zuordnungselement (52), das konfiguriert ist, um Downlink-Ressourcen für den AP zum Übertragen von Downlink-Daten an die eine oder mehreren STAs zuzuordnen, wobei die Downlink-Ressourcen Folgendes umfassen: Ressourcen für den AP zum Senden der Downlink-Daten an die eine oder die mehreren STAs und Ressourcen für die eine oder die mehreren STAs, um Rückmeldeinformationen an den AP zu senden; und/oder ein zweites Zuordnungselement (54), das konfiguriert ist, um Uplink-Ressourcen für die eine oder die mehreren STAs zum Übertragen von Uplink-Daten an den AP zuzuordnen, wobei die Uplink-Ressourcen Folgendes umfassen: Ressourcen für die eine oder die mehreren STAs zum Senden der Uplink-Daten an den AP und Ressourcen für den AP zum Senden von Rückmeldeinformationen an die eine oder die mehreren STAs; oder
ein drittes Zuordnungselement (62), das konfiguriert ist, um gemäß einer Uplink-Ressourcengranularität Uplink-Ressourcen für die eine oder die mehreren STAs zuzuordnen, um Uplink-Daten an den AP zu übertragen; und/oder ein viertes Zuordnungselement (64), das konfiguriert ist, um gemäß einer Downlink-Ressourcengranularität Downlink-Ressourcen für den AP zuzuordnen, um Downlink-Daten an die eine oder die mehreren STAs zu übertragen; oder
ein fünftes Zuordnungselement (72), das konfiguriert ist, um für eine bestimmte STA in der STA-Gruppe kontinuierliche Ressourcen der bestimmten STA zuzuordnen, wobei die kontinuierlichen Ressourcen für den AP verwendet werden, um Downlink-Daten an die bestimmte STA zu senden, und für die bestimmte STA, um Uplink-Daten an den AP zu senden.

9. Vorrichtung nach Anspruch 7, ferner **dadurch gekennzeichnet, dass** die Vorrichtung ferner Folgendes umfasst:
eine Konkurrenzkomponente (92), die konfiguriert ist, um einen Kanalkonflikt herbeizuführen, bevor der AP die Datenübertragung zwischen dem AP und der einen oder den mehreren STAs auslöst.

10. Vorrichtung nach Anspruch 7, wobei die Konkurrenzkomponente ferner konfiguriert ist, um die Kanäle zu konkurrieren, indem eine höchste Priorität bei Kanalzugriffsprioritäten verwendet wird.

11. Vorrichtung nach Anspruch 7, ferner **dadurch gekennzeichnet, dass** die Vorrichtung ferner eines aus Folgendem umfasst:
eine erste Empfangskomponente (1002), die konfiguriert ist, um Quittierungsinformationen (ACK-Informationen) und/oder Uplink-Daten von der einen oder den mehreren STAs zu empfangen, wenn der AP die Datenübertragung zwischen dem AP und der einen oder den mehreren STAs auf eine Art und Weise des Sendens von Downlink-Daten auslöst,
eine dritte Empfangskomponente (1006), die konfiguriert ist, um ACK-Informationen von der einen oder den mehreren STAs zu empfangen, wenn der AP die Datenübertragung zwischen dem AP und der einen oder den mehreren STAs in einer Weise des Sendens von Auslöseinformationen auslöst und durch die eine oder die mehreren STAs lokal gespeicherte Netzwerkzuordnungsvektoren (NAV) nicht null sind.

12. Vorrichtung nach Anspruch 7, ferner **dadurch gekennzeichnet, dass** die Vorrichtung ferner Folgendes umfasst:
eine fünfte Empfangskomponente (112), die konfiguriert ist, um Uplink-Daten von einer oder mehreren STAs mit zu sendenden Uplink-Daten zu empfangen, wobei die eine oder mehreren STAs mit den zu sendenden Uplink-Daten darum konkurrieren, auf Kanäle nach den Kanälen an den Anfängen der Ressourcen der einen oder mehrerer STAs zuzugreifen, die gemäß den Ressourcenzuordnungsinformationen als im Leerlauf befindlich erkannt wurden.

## Revendications

1. Procédé de traitement d'informations d'attribution de ressources, le procédé comprenant :
l'attribution, par un point d'accès (AP), de ressources pour la transmission de données entre l'AP et une ou plusieurs stations (STA) dans un groupe de STA en fonction d'une granularité de ressources, dans lequel la granularité de ressources comprend une durée prédéfinie et/ou une largeur de bande prédéfinie (S302) ; et
l'envoi, par l'AP, des informations d'attribution de ressources afin d'attribuer les ressources au groupe de STA (S304) ; **caractérisé en ce que**, après l'envoi par l'AP des informations d'attribution de ressources afin d'attribuer les ressources au groupe de STA, le procédé comprend en outre les étapes consistant à : détecter, par l'AP, si des canaux au début des ressources, déterminés en fonction des informations d'attribution de ressources, de la ou des STA sont inactifs ou non ; et lorsque les canaux sont déterminés comme étant inactifs, déclencher, par l'AP, la transmission de données entre l'AP et la ou les STA ;
dans lequel, avant le déclenchement, par l'AP, de la transmission de données entre l'AP et la ou les STA, le procédé comprend : la réalisation, par l'AP, d'un conflit de canal ;
dans lequel, après le déclenchement, par l'AP, de la transmission de données entre l'AP et la ou les STA, le procédé comprend au moins l'un des éléments suivants : lorsque l'AP déclenche la transmission de données entre l'AP et la ou les STA de manière à envoyer des informations de déclenchement, la réception, par l'AP, de données en liaison montante provenant de la ou des STA ; lorsque l'AP déclenche la transmission de données entre l'AP et la ou les STA de manière à envoyer des informations de déclenchement et que des NAV stockés localement par la ou les STA sont égaux à zéro, la réception, par l'AP, de données en liaison montante provenant de la ou des STA.

2. Procédé selon la revendication 1, **caractérisé en outre en ce que** l'attribution, par l'AP, des ressources pour la transmission de données entre l'AP et la ou les STA dans le groupe de STA en fonction de la granularité des ressources comprend :
l'attribution, par l'AP, de ressources en liaison descendante pour que l'AP transmette des données en liaison descendante à la ou aux STA, dans lequel les ressources en liaison descendante comprennent : des ressources pour que l'AP envoie les données en liaison descendante à la ou aux STA et des ressources pour que la ou les STA envoient des informations de retour à l'AP et/ou l'attribution, par l'AP, de ressources en liaison montante pour que la ou les STA transmettent des données en liaison montante à l'AP, dans lequel les ressources en liaison montante comprennent : des ressources pour que la ou les STA envoient les données en liaison montante à l'AP et des ressources pour que l'AP envoie des informations de retour à la ou aux STA ou
l'attribution, par l'AP, en fonction d'une granularité de ressources en liaison montante, de ressources en liaison montante pour que la ou les STA transmettent des données en liaison montante à l'AP ; et/ou l'attribution, par l'AP, en fonction d'une granularité de ressources en liaison descendante, de ressources en liaison descendante pour que l'AP transmette des données en liaison descendante à la ou aux STA ; ou
pour une STA déterminée dans le groupe de STA, l'attribution, par l'AP, des ressources continues à la STA déterminée, dans lequel les ressources continues sont utilisées pour que l'AP envoie des données en liaison descendante à la STA déterminée et que la STA déterminée envoie des données en liaison montante à l'AP.

3. Procédé selon la revendication 1, **caractérisé en outre en ce que** l'AP est en concurrence pour les canaux en utilisant une priorité la plus élevée dans les priorités d'accès au canal.

4. Procédé selon la revendication 1, **caractérisé en outre en ce que**, après le déclenchement, par l'AP, de la transmission de données entre l'AP et la ou les STA, le procédé comprend en outre au moins l'un des éléments suivants :
lorsque l'AP déclenche la transmission de données entre l'AP et la ou les STA de manière à envoyer des données en liaison descendante, la réception, par l'AP, d'informations d'accusé de réception (ACK) et/ou de données en liaison montante provenant de la ou des STA ; lorsque l'AP déclenche la transmission de données entre l'AP et la ou les STA de manière à envoyer des informations de déclenchement et que des vecteurs d'attribution de réseau (NAV), stockés localement par la ou les STA, ne sont pas égaux à zéro, la réception, par l'AP, d'informations ACK provenant de la ou des STA.

5. Procédé selon la revendication 1, **caractérisé en outre en ce que**, après l'envoi, par l'AP, des informations d'attribution de ressources pour attribuer les ressources au groupe de STA, le procédé comprend en outre :
la réception, par l'AP, de données en liaison montante provenant d'une ou de plusieurs STA avec des données en liaison montante à envoyer, dans lequel la ou les STA avec les données en liaison montante à envoyer sont en concurrence pour accéder aux canaux après que les canaux au début des ressources, déterminés en fonction des informations d'attribution de ressources, de la ou des STA sont détectés comme étant inactifs.

6. Procédé selon l'une quelconque des revendications 1 à 5, **caractérisé en outre en ce que** les informations d'attribution de ressources comprennent au moins un élément parmi :
des informations pour indiquer une manière d'attribuer des ressources, une granularité de ressources en liaison montante, une granularité de ressources en liaison descendante, une image bitmap d'indication de service en liaison montante, une image bitmap d'indication de service en liaison descendante et une image bitmap d'indication de service en liaisons montante et descendante ; dans lequel,
l'image bitmap d'indication de service en liaison montante, l'image bitmap d'indication de service en liaison descendante et l'image bitmap d'indication de service en liaisons montante et descendante sont configurées pour indiquer les nombres de ressources attribuées au groupe de STA par l'AP respectivement ; ou
après réception des informations d'attribution de ressources, le groupe de STA obtient des informations d'emplacement d'attribution de ressources du groupe de STA en fonction des emplacements correspondants et des informations d'indication d'attribution de ressources de service du groupe de STA dans l'image bitmap d'indication de service et des informations d'indication d'attribution de ressources de service d'autres STA dans un groupe à des emplacements correspondants dans l'image bitmap d'indication de service à l'aide d'informations de granularité d'attribution de ressources en liaison montante et d'informations de granularité d'attribution de ressources en liaison descendante.

7. Dispositif de traitement d'informations d'attribution de ressources, dans lequel le dispositif est situé au niveau d'un point d'accès (AP) et qui comprend :
un composant d'attribution (42), configuré pour attribuer des ressources pour la transmission de données entre l'AP et une ou plusieurs stations (STA) dans un groupe de STA en fonction d'une granularité de ressources, dans lequel la granularité de ressources comprend une durée prédéfinie et/ou une largeur de bande prédéfinie,
un composant d'envoi (44), configuré pour envoyer des informations d'attribution de ressources afin d'attribuer les ressources au groupe de STA : un dispositif étant **caractérisé en ce qu'**il comprend en outre :
un composant de détection (82), configuré pour détecter si des canaux au début des ressources, déterminés en fonction des informations d'attribution de ressources, de la ou des STA sont inactifs ou non ;
un composant déclencheur (84), configuré pour, lorsque les canaux sont déterminés comme étant inactifs, déclencher la transmission de données entre l'AP et la ou les STA ;
un composant de concurrence (92), configuré pour, avant que l'AP ne déclenche la transmission de données entre l'AP et la ou les STA, effectuer un conflit de canal ;
dans lequel le dispositif comprend en outre au moins l'un des éléments suivants : un deuxième composant de réception (1004) configuré pour, lorsque l'AP déclenche la transmission de données entre l'AP et la ou les STA de manière à envoyer des informations de déclenchement, recevoir des données en liaison montante provenant de la ou des STA, un quatrième composant de réception (1008) configuré pour, lorsque l'AP déclenche la transmission de données entre l'AP et la ou les STA de manière à envoyer des informations de déclenchement et que des NAV stockés localement par la ou les STA sont égaux à zéro, recevoir des données en liaison montante provenant de la ou des STA.

8. Dispositif selon la revendication 7, **caractérisé en outre en ce que** le composant d'attribution comprend :
un premier élément d'attribution (52), configuré pour attribuer des ressources en liaison descendante pour que l'AP transmette des données en liaison descendante à la ou aux STA, dans lequel les ressources en liaison descendante comprennent : des ressources pour que l'AP envoie les données en liaison descendante à la ou aux STA et des ressources pour que la ou les STA envoient des informations de retour à l'AP ; et/ou un deuxième élément d'attribution (54), configuré pour attribuer des ressources en liaison montante pour que la ou les STA transmettent des données en liaison montante à l'AP, dans lequel les ressources en liaison montante comprennent : des ressources pour que la ou les STA envoient les données en liaison montante à l'AP et des ressources pour que l'AP envoie des informations de retour à la ou aux STA ; ou
un troisième élément d'attribution (62), configuré pour attribuer, en fonction d'une granularité de ressources en liaison montante, des ressources en liaison montante pour que la ou les STA transmette des données en liaison montante à l'AP ; et/ou un quatrième élément d'attribution (64), configuré pour attribuer, selon une granularité de ressources en liaison descendante, des ressources en liaison descendante pour que l'AP transmette des données en liaison descendante à la ou aux STA; ou
un cinquième élément d'attribution (72), configuré, pour une STA déterminée dans le groupe de STA, pour attribuer des ressources continues à la STA déterminée, dans lequel les ressources continues sont utilisées pour que l'AP envoie des données en liaison descendante à la STA déterminée et pour que la STA déterminée envoie des données en liaison montante à l'AP.

9. Dispositif selon la revendication 7, **caractérisé en outre en ce que** le dispositif comprend en outre :
un composant de concurrence (92) configuré pour, avant que l'AP ne déclenche la transmission de données entre l'AP et la ou les STA, réaliser un conflit de canal.

10. Dispositif selon la revendication 7, dans lequel le composant de concurrence est en outre configuré pour être en concurrence pour les canaux en utilisant une priorité la plus élevée dans les priorités d'accès aux canaux.

11. Dispositif selon la revendication 7, **caractérisé en outre en ce que** le dispositif comprend en outre au moins l'un des éléments suivants :
un premier composant de réception (1002) configuré pour, lorsque l'AP déclenche la transmission de données entre l'AP et la ou les STA de manière à envoyer des données en liaison descendante, recevoir des informations d'accusé de réception (ACK) et/ou des données en liaison montante provenant de la ou des STA,
un troisième composant de réception (1006) configuré pour, lorsque l'AP déclenche la transmission de données entre l'AP et la ou les STA de manière à envoyer des informations de déclenchement et que des vecteurs d'attribution de réseau (NAV), stockés localement par la ou les STA, ne sont pas égaux à zéro, recevoir des informations ACK provenant de la ou des STA.

12. Dispositif selon la revendication 7, **caractérisé en outre en ce que** le dispositif comprend en outre :
un cinquième composant de réception (112), configuré pour recevoir des données en liaison montante provenant d'une ou de plusieurs STA avec des données en liaison montante à envoyer, dans lequel la ou les STA avec les données en liaison montante à envoyer sont en concurrence pour accéder à des canaux après que les canaux au niveau du début des ressources, déterminés en fonction des informations d'attribution de ressources de la ou des STA, sont détectés comme étant inactifs.
